(19) Europäisches Patentamt
European Patent Office
Office européen des brevets

(11) Veröffentlichungsnummer: 0 004 334
B1

(12) # EUROPÄISCHE PATENTSCHRIFT

(45) Veröffentlichungstag der Patentschrift: 21.10.81

(21) Anmeldenummer: 79100749.5

(22) Anmeldetag: 13.03.79

(51) Int. Cl.³: C 07 C 125/06,
C 07 C 147/06,
C 07 C 149/437,
C 07 C 155/02,
A 01 N 47/12

(54) **Carbaminsäureester, Schädlingsbekämpfungsmittel, die diese Ester als Wirkstoffe enthalten, Verfahren zur Herstellung dieser Ester sowie deren Verwendung zur Bekämpfung von Schädlingen.**

(30) Priorität: 17.03.78 CH 2929/78

(43) Veröffentlichungstag der Anmeldung:
03.10.79 Patentblatt 79/20

(45) Bekanntmachung des Hinweises auf die Patenterteilung:
21.10.81 Patentblatt 81/42

(84) Benannte Vertragsstaaten:
BE CH DE FR GB IT LU NL

(56) Entgegenhaltungen:
DE - A - 2 637 395

(73) Patentinhaber: F. HOFFMANN-LA ROCHE & CO. Aktiengesellschaft
CH-4002 Basel (CH)

(72) Erfinder: Fischer, Ulf, Dr.
Madlenweg 2
CH-4402 Frenkendorf (CH)
Erfinder: Schneider, Fernand, Dr.
Dornacherstrasse 145
CH-4053 Basel (CH)
Erfinder: Zurflüh, René, Dr.
Dachslenbergstrasse 54
CH-8180 Bülach (CH)

(74) Vertreter: Lederer, Franz, Dr. et al,
Patentanwälte Lederer, Meyer Lucile-Grahn-Strasse 22
D-8000 München 80 (DE)

EP 0 004 334 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Carbaminsäureester, Schädlingsbekämpfungsmittel, die diese Ester als Wirkstoffe enthalten, Verhfahren zur Herstellung dieser Ester sowie deren Verwendung zur Bekämpfung von Schädlingen

Die Erfindung betrifft Carbaminsäurederivate der allgemeinen Formel

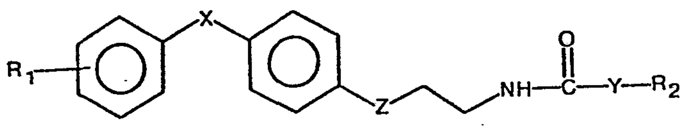
I

worin $R_1$ Wasserstoff, Alkyl mit 1—6 Kohlenstoffatomen, Fluor, Chlor, Trifluormethyl, Hydroxy oder Methoxy, X ein Sauerstoffatom, eine Carbonylgruppe, eine Methylengruppe, ein Schwefelatom oder eine Sulfonylgruppe, Z ein Sauerstoffatom, eine Methylengruppe oder ein Schwefelatom, Y ein Sauerstoffatom oder ein Schwefelatom und $R_2$ alkyl mit 1—6 Kohlenstoffatomen bedeuten,

und insbesonders Schädlingsbekämpfungsmittel, welche diese Verbindungen der Formel I sowie inertes Trägermaterial enthalten.

Auch die deutsche Offenlegungsschrift 2 637 395 vom 24. 2. 77 offenbart Carbamate, nämlich Phenoxyphenoxyalkylcarbamate, die sich als Wirkstoffe von Schädlingsbekämpfungsmitteln eignen. Die erfindungsgemässen Verbindungen I unterscheiden sich von den bekannten also dadurch, dass die durch Phenoxy substituierte Phenoxyalkylgruppe an das Stickstoffatom und nicht, wie im bekannten Fall, an die Carbonyloxygruppe gebunden ist.

Die Verbindungen der Formel I können dadurch hergestellt werden, dass man

a) ein Phenol der Formel

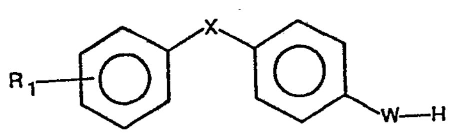
II

worin $R_1$ und X die oben angegebene Bedeutung besitzen und W ein Sauerstoffatom oder ein Schwefelatom bedeutet,

mit einem Halogenid der Formel

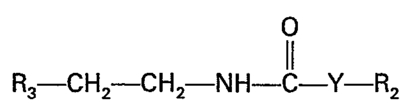
III

worin Y und $R_2$ die oben angegebene Bedeutung besitzen und $R_3$ Chlor, Brom oder Jod bedeutet, umsetzt, oder

b) eine Verbindung der Formel

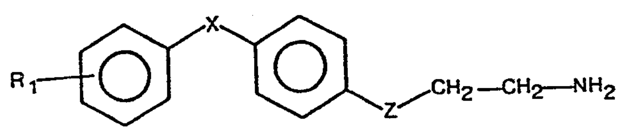
IV

worin $R_1$, X und Z die oben angegebene Bedeutung besitzen

mit einer Verbindung der Formel

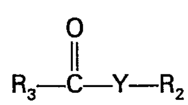
V

worin Y, $R_2$ und $R_3$ die oben angegebene Bedeutung besitzen,

umsetzt oder

c) eine Verbindung der Formel

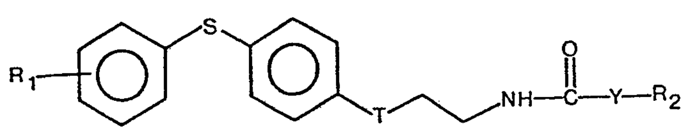
VI

worin $R_1$, Y und $R_2$ die oben angegebene Bedeutung besitzen und T ein Sauerstoffatom oder eine Methylengruppe bedeutet, mit einer Persäure behandelt.

Beispiele für geeignete Alkylreste mit 1—6 Kohlenstoffatomen sind Methyl, Aethyl, Propyl, Isopropyl, Butyl, Isobutyl, sek.-Butyl, tert.-Butyl, Pentyl, Isopentyl, Hexyl, Isohexyl und dergleichen.

Gemäss Verfahrensvariante a) erfolgt die Umsetzung eines Phenols der Formel II mit Halogeniden der Formel III in einem inerten organischen Lösungsmittel, vorzugsweise Dimethylformamid, Dioxan, Hexamethylphosphorsäuretriamid, Tetrahydrofuran, Dimethoxyäthan oder in einer Kombination zweier oder mehrerer dieser Lösungsmittel. Zweckmässigerweise wird das entsprechende Phenol eingesetzt und zwar in Gegenwart eines Alkalimetalls, eines entsprechenden Hydrides oder Amides oder eines Alkalimetallhydroxydes oder Alkalimetallcarbonates, vorzugsweise Kaliumcarbonat. Hierbei bildet sich aus dem Phenol das entsprechende Phenolat. Bevorzugte Alkalimetalle sind Natrium und Kalium. Der Reaktionstemperatur kommt keine entscheidende Bedeutung zu. Sie kann zweckmässigerweise zwischen —20° und der Siedetemperatur des Reaktionsgemisches liegen. Eine bevorzugte Reaktionstemperatur liegt zwischen Raumtemperatur und 100°C, besonders bevorzugt zwischen 80 und 100°C. Für den Fall, dass $R_3$ in Formel III Brom oder Jod bedeutet liegen die Reaktionstemperaturen vorzugsweise etwas tiefer, besonders bevorzugt bei Raumtemperatur.

Gemäss Verfahrensvariante b) erfolgt die Umsetzung eines Amins der Formel IV mit einer Verbindung der Formel V in einem inerten organischen Lösungsmittel, wie beispielsweise Aceton, vorzugsweise in Gegenwart einer Base, wie ein Alkalimetallcarbonat, vorzugsweise Kaliumcarbonat. Als Reaktionstemperatur dient vorzugsweise die Rückflusstemperatur des Reaktionsgemisches. Im allgemeinen ist die Reaktion nach ungefähr einem Tag vollständig abgelaufen. Danach filtriert man das Reaktionsgemisch von gegebenenfalls vorhandenen ungelösten Salzen ab, dampft das Filtrat im Vakuum ein und kristallisiert den Rückstand um.

Gemäss Verfahrensvariante c) wird eine Verbindung der Formel VI zur entsprechenden Sulfonylverbindung oxydiert. Als Oxydationsmittel sind organische Persäuren hierzu besonders geeignet, vornehmlich die m-Chlorperbenzoesäure. Die Oxydation wird verteilhaft in einem inerten organischen Lösungsmittel, insbesondere in Methylenchlorid in einem zwischen 0° und der Raumtemperatur liegenden Temperaturbereich durchgeführt. Damit eine Oxydation des Sulfidschwefels zum Sulfonyl-Derivat sicher gewährleistet ist, verwendet man mindestens 2 Mol Persäure auf 1 Mol Thioäther.

Bevorzugte Verfahrensendprodukte sind Verbindungen der Formel I worin Z ein Sauerstoffatom oder ein Schwefelatom bedeutet und insbesondere solche, worin $R_1$ Wasserstoff, Z ein Sauerstoffatom, X ein Sauerstoffatom, eine Methylengruppe oder eine Carbonylgruppe, Y ein Sauerstoffatom und $R_2$ Aethyl oder Isopropyl bedeuten.

Besonders bevorzugte Verbindungen sind:

2-[p-(p-Chlorbenzoyl)phenoxy]äthylcarbaminsäureäthylester,
2-(p-Benzoylphenoxy)äthylcarbaminsäureäthylester,
2-[p-(p-Chlorbenzyl)phenoxy]äthylcarbaminsäureäthylester,
2-[p-(o-Chlorbenzoyl)phenoxy]äthylcarbaminsäureäthylester,
2-/p-[(p-Chlorphenyl)thio]phenoxy/äthylcarbaminsäureäthylester,
2-/p-[(p-Chlorphenyl)sulfonyl]phenoxy/äthylcarbaminsäureäthylester,
2-[p-(p-Toluoyl)phenoxy]äthylcarbaminsäureäthylester,
2-[p-(p-Tolyloxy)phenoxy]äthylcarbaminsäureäthylester,
2-[p-(m-Toluoyl)phenoxy]äthylcarbaminsäureäthylester,
2-[p-(o-Toluoyl)phenoxy]äthylcarbaminsäureäthylester,
2-[p-(p-Hydroxybenzoyl)phenoxy]äthylcarbaminsäureäthylester,
2-(p-Benzylphenoxy)äthylcarbaminsäureäthylester,
2-(p-Benzoylphenoxy)äthylthiocarbaminsäure-S-äthylester,
2-[p-(Phenylsulfonyl)phenoxy]äthylcarbaminsäureäthylester,
2-[p-(Phenylthio)phenoxy]äthylcarbaminsäureäthylester,
2-(p-Phenoxyphenoxy)äthylthiocarbaminsäure-S-äthylester,
2-[p-(Phenylthio)phenoxy]äthylthiocarbaminsäure-S-äthylester,
2-[p-(p-Chlorphenoxy)phenoxy]äthylcarbaminsäureäthylester,
2-[p-(p-Chlorphenoxy)phenoxy]äthylcarbaminsäureisopropylester,
2-(p-Phenoxyphenoxy)äthylcarbaminsäureäthylester,
2-[p-(m-Tolyloxy)phenoxy]äthylcarbaminsäureäthylester,
2-[p-(p-tert.-Butylphenoxy)phenoxy]äthylcarbaminsäureäthylester,

Die Erfindung betrifft ferner Schädlingsbekämpfungsmittel, welche eine oder mehrere Verbindungen der Formel I und inertes Trägermaterial enthalten, sowie deren Verwendung zur Schädlingsbekämpfung.

Im Gegensatz zu den meisten bisher bekannten Schädlingsbekämpfungsmitteln, die als Kontakt- und Frassgifte die Tiere töten, lähmen oder vertreiben, greifen die erfindungsgemässen Schädlingsbekämpfungsmittel in das hormonale System des tierischen Organismus ein. Bei Insekten wird beispielsweise die Umwandlung zur Imago, die Ablage von entwicklungsfähigen Eiern und die Entwicklung von abgelegten normalen Eiern gestört. Die Generationsfolge wird unterbrochen und die Tiere

werden indirekt getötet. Für Wirbeltiere sind die Schädlingsbekämpfungsmittel praktisch ungiftig. Die Toxizität liegt bei über 1000 mg/kg Körpergewicht. Die neuen Schädlingsbekämpfungsmittel werden überdies leicht abgebaut. Die Gefahr einer Kumulation ist deshalb ausgeschlossen. Sie können demgemäss unbedenklich zur Bekämpfung von Schädlingen bei Tieren, Pflanzen und Vorräten und im Wasser eingesetzt werden.

Die erfindungsgemässen Schädlingsbekämpfungsmittel eignen sich zur Bekämpfung von wirbellosen Tieren, vorzugsweise von Arthropoden und Nematoden, besonders von Insekten der Ordnungen Diptera, Lepidotera, Homoptera, Hymenoptera, Coleoptera, Orthoptera, Heteroptera, Psocoptera, Thysanoptera, Neuroptera, Blattida; von Arachnida der Ordnung Acarina; von Nematoden der Ordnung Tylenchida. Die Wirkung gegen Mücken und Homopteren stellt einen bevorzugten Aspekt der vorliegenden Erfindung dar. Beispiele für derartige Insekten sind:

| | |
|---|---|
| Aedes aegypti | Gelbfiebermücke |
| Culex pipiens | Gemeine Stechmücke |
| Aedes taeniorrhynchus | |
| Anopheles stephensi | |
| Calliphora sp. | |
| Musca domestica | Stubenfliege |
| | |
| Adoxophyes reticulana | Fruchtschalenwickler |
| Ephestia kühniella | Mehlmotte |
| Galleria mellonella | Wachsmotte, Grosse |
| Heliothis virescens | |
| Laspeyresia pomonella | Apfelwickler, Obstmade |
| Choristoneura fumiferana | nordamerkan. Tannenknospenwickler |
| | |
| Arbyrotenia velutinana | |
| Synanthedon pictipes | |
| Lobesia botrana | Traubenwickler |
| Ostrinia nubilalis | Maiszünsler |
| Plodia interpunctella | Dörrobstmotte |
| Plutella xylostella | Kohlmotte |
| Spodoptera littoralis | Baumwolleule |
| Tineola biselliella | Kleidermotte |
| Bucculatrix thurberiella | Baumwollzwergwickler |
| | |
| Aphis fabae | Bohnenblattlaus, schwarze |
| Aphis pomi | Apfelblattlaus |
| Aonidiella aurantii | Kalifornische Orangenschildlaus |
| | |
| Quadraspidiotus perniciosus | San-Jose-Schildlaus |
| Unaspis citri | |
| Saissetia oleae | schwarze Olivenschildlaus |
| Aspidiotus hederae | Oleanderschildlaus |
| Coccus hesperidum | Lecania — Schildlaus |
| Myzus persicae | Pfirsichblattlaus |
| Planococcus citri | Gewächshausschmierlaus |
| Megoura viciae | |
| Trialeurodes vaporariorum | Weisse Gewächshausfliege |
| Laodelphax striatellus | Getreidezikade |
| | |
| Dermestes maculatus | Dornspeckkäfer |
| Epilachna chrysomelina | Gunkenkäfer, gefleckter |
| Leptinotarsa decemlineata | Kartoffelkäfer |
| Oryzaephilus surinamensis | Getreideplattkäfer |
| Otiorrhynchus sulcatus | Dickmaulrüssler, gefurchter |
| Rhizopertha dominica | Getreidekapuziner |
| Sitophilus granarius R + S | Kornkäfer, gewöhnlicher |
| Sitophilus oryzae R + S | Reiskäfer |
| Tenebrio molitor | Mehlkäfer, gewöhnlicher |
| Tribolium castaneum R + S | Reismehlkäfer, rotbrauner |
| Trogoderma granarium | Khaprakäfer |

| | |
|---|---|
| Blattella germanica | Hausschabe (Schwabenkäfer) |
| Leucophaea surinamensis | |
| Nauphoeta cinerea | Grausschabe |
| Psylla spp. | Blattsauger |
| Blatta orientalis | |
| Periplaneta americana | |
| Dysdercus cingulatus | Baumwollwanze, Cottonstainer |
| Rhodnius prolixus | Kusswanze |
| Tetranychus urticae | Bohnenspinnmilbe |
| Tetranychus cinnabarinus | Karminspinnmilbe |
| Phytoseilus macrophilis | Raubmilbe |
| Panonynchus ulmi | |
| Ditylenchus dipsaci | Stengelälchen |
| Heterodera cruciferae | Kohlzystenälchen |
| Meloidogyne sp. | Wurzelgallenälchen |

R = resistenter Stamm
S = sensibler Stamm

Wie in den nachstehenden Beispielen näher ausgeführt wird, genügt bereits eine Dosierung von $10^{-4}$—$10^{-6}$ g/cm$^2$ oder weniger, d.h. Spritzbrühenkonzentration von 10%—0,1% und weniger, um den gewünschten Effekt zu erzielen.

Die erfindungsgemässen Schädlingsbekämpfungsmittel können in Form von Konzentraten, Granulaten oder zusammen mit Trägern als Sprays, Aerosole oder Pulver Verwendung finden. Für gewisse Zwecke kann es vorteilhaft sein, Emulsionen, Suspensionen oder Lösungen zusammen mit Emulgier- oder Netzmitteln zu verwenden. Als Trägerstoffe kommen z.B. in Frage: Kreide, Talk, Bentonit, Kaolin, Diatomeenerde, Kieselerde, Fullererde, Kalk, Gips, Pulver und Mehle aus organischen Abfallprodukten, Polymere, wie z.B. Polyvinylchlorid, Polyäthylen, Polyacrylat, Polystyrol und Mischpolymerisate etc. Die entsprechenden Formulierungen können auch Additive enthalten, wie z.B. Antioxydantien, UV-Absorber und andere Stabilisatoren, sowie Riech- und Lockstoffe etc. Es können auch Formulierungen in Frage kommen, die den Wirkstoff in dosierten Mengen freigeben, wie z.B. Mikrokapseln, umhüllte Granulate, Lösungen in polymeren Stoffen etc. Alle diese Beispiele beschränken die Erfindung nicht, sondern dienen nur als Richtlinien.

Im allgemeinen kann man die Schädlingsbekämpfungsmittel der vorliegenden Erfindung nach den Verfahren formulieren, wie sie z.B. in Farm Chemicals, Band 128, Seite 52 und folgende beschrieben sind. Die erfindungsgemässen Schädlingsbekämpfungsmittel können auch noch andere Zusätze, wie Emulgatoren oder maskierende Agenzien enthalten.

Die erfindungsgemässen Schädlingsbekämpfungsmittel können in Form von Konzentraten vorliegen, die sich für die Lagerung und den Transport eignen. Solche Konzentrate können z.B. 40—90% von Wirkstoffen der Formel I enthalten. Granulate enthalten üblicherweise 1% bis 5% Wirkstoff und werden bevorzugt in der Moskito-Bekämpfung eingesetzt. Diese Konzentrate können mit gleichen oder verschiedenen Trägermaterialien bis zu Konzentrationen verdünnt werden, die sich für den praktischen Gebrauch eignen. Im gebrauchsfertigen Mittel — wie es versprüht wird — können z.B. Wirkstoffkonzentrationen von 0.01—0,5%, bevorzugt 0,1%, vorliegen. Die Wirkstoffkonzentration kann jedoch auch kleiner oder grösser sein.

Die erfindungsgemässen Schädlingsbekämpfungsmittel können nach den üblichen Methoden gegen die Schädlinge eingesetzt werden, wie z.B. mittels Kontakt oder durch Einnahme mit der Nahrung. Die Verbindungen der Formel I eignen sich auch als Zusätze zum Futter für Seidenraupen und lassen sich in der Seidenraupenzucht zur Verbesserung der Qualität des Seidenfadens verwenden. Die nachstehenden Beispiele dienen der weiteren Veranschaulichung der Erfindung. Die Temperaturen sind in Grad Celsius (°C) angegeben.

## Beispiel 1

10 g p-Hydroxybenzophenon werden in 100 ml Dimethylformamid gelöst. Man gibt 8,3 g 2-Chloräthylcarbaminsäureäthylester und 13,8 g Kaliumcarbonat hinzu und erwärmt das Reaktionsgemisch unter Rühren während 3 Stunden auf 100°. Dann giesst man das Reaktionsgemisch auf Eiswasser, filtriert die erhaltenen Kristalle ab und wäscht diese mit Wasser. Die kristalline Substanz wird im Vakuumtrockenschrank bei 40° getrocknet. Man kristallisiert einmal aus Aether um und erhält 12,5 g (80%) 2-(p-Benzoylphenoxy)-äthylcarbaminsäureäthylester, Fp. 84—86°.

In Analogie zu Beispiel 1 erhält man aus:

p-(p-Hydroxybenzoyl)phenol und 2-Chloräthylcarbaminsäureäthylester den 2-[p-(p-Hydroxybenzoyl)phenoxy]äthylcarbaminsäureäthylester, Fp. 114—115° (aus Aether);

p-Benzylphenol und 2-Chloräthylcarbaminsäureäthylester den 2-(p-Benzylphenoxy)äthylcarbaminsäureäthylester, Fp. 61—63° (aus Aether);

p-(Phenylthio)phenol und 2-Chloräthylcarbaminsäureäthylester den 2-[p-(p-Phenylthio)phenoxy]äthylcarbaminsäureäthylester, Fp. <20°.

Beispiel 2

5,5 g 2-(p-Benzoylphenoxy)äthylamin und 13 g Chlorameisensäureäthylester werden in 200 ml Aceton gelöst. Man gibt 19,3 g Kaliumcarbonat hinzu und heizt unter Rühren unter Rückfluss während 30 Stunden. Man filtert anschliessend ab, wäscht die Kristalle mit Aceton und dampft das Filtrat im Vakuum ein. Den Rückstand nimmt man in Essigester auf, wäscht die organische Phase mit Wasser, trocknet über Natriumsulfat und dampft im Vakuum ein. Der Rückstand wird in Aether gelöst und durch Zugabe von Cyclohexan zur Kristallisation gebracht. Man erhält 3,8 g (61%) 2-(p-Benzoylphenoxy)äthylcarbaminsäureäthylester, Fp. 84—86°.

In Analogie zu Beispiel 2 erhält man aus:

2-[p-(p-Chlorbenzoyl)phenoxy]äthylamin und Chlorameisensäureäthylester den 2-[p-(p-Chlorbenzoyl)phenoxy]äthylcarbaminsäureäthylester, Fp. 136—137° (aus Essigsäureäthylester/Aether);

2-[p-(p-Chlorbenzyl)phenoxy]äthylamin und Chlorameisensäureäthylester den 2-[p-(p-Chlorbenzyl)phenoxy]äthylcarbaminsäureäthylester, Fp. 81—82° (aus Aether/Cyclohexan);

2-[p-(o-Chlorbenzoyl)phenoxy]äthylamin und Chlorameisensäureäthylester den 2-[p-(o-Chlorbenzoyl)phenoxy]äthylcarbaminsäureäthylester, Fp. 82—83° (aus Aether/Cyclohexan);

2-/p-[(p-Chlorphenyl)thio]phenoxy/äthylamin und Chlorameisensäureäthylester den 2-/p-[(p-Chlorphenyl)thio]phenoxy/äthylcarbaminsäureäthylester, Fp. 71—72° (aus Aether/Petroläther tiefsiedend);

2-[p-(p-Toluoyl)phenoxy]äthylamin und Chlorameisensäureäthylester den 2-[p-(p-Toluoyl)-phenoxy]äthylcarbaminsäureäthylester, Fp. 85—87° (aus Aether);

2-[p-(p-Tolyloxy)phenoxy]äthylamin und den Chlorameisensäureäthylester den 2-[p-(p-Tolyloxy)-phenoxy]äthylcarbaminsäureäthylester, Fp. 78—79° (aus Aether);

2-[p-(m-Toluoyl)phenoxy]äthylamin und Chlorameisensäureäthylester den 2-[p-(m-Toluoyl)-phenoxy]äthylcarbaminsäureäthylester, Fp. 84—86° (aus Aether/Petroläther tiefsiedend);

2-[p-(o-Toluoyl)phenoxy]äthylamin und Chlorameisensäureäthylester den 2-[p-(o-Toluoyl)phenoxy]äthylcarbaminsäureäthylester, Fp. 72—73° (aus Aether/Petroläther tiefsiedend).

Beispiel 3

3,5 g 2-/p-[(p-Chlorphenyl)thio]phenoxy/äthylcarbaminsäureäthylester werden in 43 ml Chloroform gelöst. Unter Rühren gibt man innert 15 Minuten 4,3 g m-Chlorperbenzoesäure portionenweise hinzu. Nach beendeter Zugabe rührt man weitere 2 Stunden bei Zimmertemperatur und filtriert die Kristalle ab. Das Filtrat wäscht man mit 2 N Natronlauge, trocknet die organische Phase über Natriumsulfat und dampft im Vakuum ein. Den Rückstand kristallisiert man aus Aether um. Man erhält 3,6 g (94%) 2-/p-[(p-Chlorphenyl)sulfonyl]phenoxy/äthylcarbaminsäureäthylester. Fp. 120—121°.

Beispiel 4

4 g 2-[(p-Phenoxy)phenoxy]äthylamin und 11,2 g of Chlorthioameisensäure-S-äthylester werden in 150 ml Aceton gelöst. Man gibt 14,5 g Kaliumcarbonat hinzu und erhitzt das Reaktionsgemisch während 6 Stunden unter Rückfluss. Das Reaktionsgemisch filtriert man ab, wäscht den Rückstand mit Aceton und dampft das Filtrat im Vakuum ein. Den kristallinen Rückstand schlämmt man in Cyclohexan auf und filtriert ab. Man erhält 2,5 g (53%) 2-[(p-Phenoxy)phenoxy]äthylthiocarbaminsäure-S-äthylester. Fp. 56—58°.

Beispiel 5

4,7 g 2-[p-(Phenylthio)phenoxy]äthylcarbaminsäureäthylester, werden in 47 ml Chloroform gelöst. Unter Rühren gibt man portionsweise 6,4 g m-Chlorperbenzoesäure zu. Die Reaktionstemperatur steigt nicht über 40°. Nach beendeter Zugabe rührt man weitere 2-Stunden bei Zimmertemperatur, filtriert die Kristalle ab und wäscht diese mit Chloroform. Das Filtrat wäscht man dreimal mit 2 N Natronlauge, einmal mit Wasser, trocknet über Natriumsulfat und dampft die organische Phase im Vakuum ein. Den Rückstand kristallisiert man aus Aceton. Man erhält 2,8 g (50%) 2-[p-(Phenylsulfonyl)phenoxy]äthylcarbaminsäureäthylester. Fp. 100—101°.

Beispiel 6

6,4 g 2-(p-Benzoylphenoxy)äthylamin und 17,2 g Chlorthioameisensäure-S-äthylester werden in 230 ml Aceton gelöst. Man gibt 22,2 g Kaliumcarbonat zu und erhitzt unter Rückfluss während 6 Stunden. Nach dem Abkühlen auf Zimmertemperatur filtriert man ab, wäscht den Rückstand mit Aceton und dampft das Filtrat im Vakuum ein. Den Rückstand schlämmt man in heissem Aether auf

und filtriert. Der Rückstand wird mit Aether gewaschen und das Filtrat im Vakuum eingedampft. Der Rückstand wird aus Aether umkristallisiert. Umkristallisation der Mutterlauge liefert nochmals 1 g des Produktes. Man erhält 2-(p-Benzoylphenoxy)äthylthiocarbaminsäure-S-äthylester. Fp. 90—92°.

Beispiel 7

7 g 2-[p-(Phenylthio)phenoxy]äthylamin und 18,6 g Chlorthioameisensäure-S-äthylester werden in 250 ml Aceton gelöst. Man gibt 24 g Kaliumcarbonat hinzu und erhitzt unter Rückfluss während 6 Stunden. Anschliessend filtriert man ab, wäscht den Rückstand mit Aceton und dampft das Filtrat im Vakuum ein. Die erhaltenen 13 g Rückstand werden über die 10-fache Menge Kieselgel mit Aether/-Cyclohexan (7:3) filtriert. Die ersten Fraktionen ergeben 10,2 g, die aus Aether/Petroläther tiefsiedend umkristallisiert werden. Man erhält 6,3 g (76%) 2-[p-(Phenylthio)phenoxy]äthylthiocarbaminsäure-S-äthylester, Fp. 77—79°.

Beispiel 8

18,4 g Kaliumcarbonat werden zusammen mit 8,0 g 2-[p-(p-Chlorphenoxy)phenoxy]äthylamin-hydrochlorid und 16,0 g Chlorameisensäureäthylester in 210 ml Aceton unter Rühren 7 Stunden lang zum Rückfluss erhitzt. Ungelöstes Salz wird abgesaugt und mit Aceton gut gewaschen. Das Filtrat wird im Vakuum eingedampft. Der verbleibende kristalline Rückstand wird in Essigester gelöst, mit Wasser und gesättigter Natriumchloridlösung gewaschen, über Magnesiumsulfat getrocknet und wieder eingeengt. Der Rückstand wird aus Diisopropyläther umkristallisiert. Man erhält 7,3 g (81,5%) 2-[p-(p-Chlorphenoxy)phenoxy]äthylcarbaminsäureäthylester. Fp. 99—100°.

Das Ausgangsmaterial kann wie folgt hergestellt werden:

10,88 g einer 50%igen Natriumhydrid-Suspension in Mineralöl werden mit 230 ml absolutem Dimethylformamid verdünnt und innerhalb 30 Minuten mit einer Lösung von 50 g p-(p-Chlorphenoxy)-phenol in 230 ml absolutem Dimethylformamid versetzt, wobei die Temperatur schwach ansteigt. Nachdem das Gemisch noch 30 Minuten bei Raumtemperatur gerührt wurde, wird unter Kühlung im Wasserbad die Lösung von 18,8 g Chloracetonitril in 200 ml absolutem Dimethylformamid zugetropft. Aschliessend wird das Reaktionsgemisch über Nacht bei 50° gerührt. Zur Aufarbeitung wird das abgekühlte Reaktionsgemisch mit 1 Liter Wasser verdünnt, dann fünfmal mit je 200 ml Essigester extrahiert, die organischen Phasen zweimal mit 100 ml 2 N Natriumcarbonatlösung und einmal mit 100 ml gesättigter Natriumchloridlösung gewaschen, über Magnesiumsulfat getrocknet und eingedampft. Das so erhaltene rohe Reaktionsprodukt (80 g dunkles Oel) wird durch Chromatographie an Kieselgel gereinigt. Laufmittel: Toluol. Man erhält 45 g [p-(p-Chlorphenoxy)phenoxy]acetonitril (76%) als farbloses Oel.

In eine Lösung von 45 g [p-(p-Chlorphenoxy)phenoxy]acetonitril in 850 ml absolutem Tetrahydrofuran wird unter Eiskühlung Diboran, hergestellt aus 69 g Natriumborhydrid und 487 ml Bortrifluorid-Aetherat, eingeleitet und das Reaktionsgemisch über Nacht bei Raumtemperatur gerührt. Zur Aufarbeitung wird das Reaktionsgemisch vorsichtig mit 690 ml 2 N Salzsäure angesäuert, am Rotationsverdampfer im Vakuum weitgehend eingeengt. Der Rückstand wird in 300 ml Wasser suspendiert, mit 900 ml Toluol überschichtet und mit 2 N Natronlauge wieder alkalisch gestellt. Die organische Phase wird abgetrennt, die wässrige Phase noch zweimal mit Toluol extrahiert. Die vereinigten Toluolphasen werden mit gesättigter Natriumchloridlösung neutral gewaschen, über Magnesiumsulfat getrocknet und im Vakuum eingedampft. Der ölige Rückstand wird in Aethanol aufgenommen, mit Salzsäure in Aether angesäuert, das ausfallende 2-[p-(p-Chlorphenoxy)phenoxy]-äthylamin-hydrochlorid wird aus Alkohol/Aether umkristallisiert. Ausbeute: 36,5 g (70%), farbloses kristallines Produkt. Fp. 217—220°.

In Analogie zum vorstehenden Beispiel erhält man aus 2-[p-(p-Chlorphenoxy)phenoxy]äthylamin-hydrochlorid und Chlorameisensäureisopropylester den 2-[p-(p-Chlorphenoxy)phenoxy]äthylcarbaminsäureisopropylester. Fp. 88—89° (aus Diisopropyläther).

Beispiel 9

9,3 g p-(p-Phenoxy)phenol, 15,1 g 2-(Chloräthyl)carbaminsäureäthylester und 27,6 g Kaliumcarbonat werden in 150 ml Dimethylformamid 5 Stunden lang bei 110° gerührt. Das Reaktionsgemisch wird in 300 ml Eiswasser aufgenommen und dreimal mit je 200 ml Aether extrahiert. Die organische Phase wird zweimal mit je 100 ml 2 N Natronlauge und zweimal mit je 100 ml gesättigter Kochsalzlösung gewaschen, über Magnesiumsulfat getrocknet und im Vakuum eingedampft. Der Rückstand wird aus Petroläther umkristallisiert. Man erhält 11,6 g (77%) 2-(p-Phenoxyphenoxy) äthylcarbaminsäureäthylester. Fp. 53—54°

In Analogie zum vorstehenden beispiel erhält man aus

p-(m-Toyloxy)phenol und (2-Chloräthyl)carbaminsäureäthylester den 2-[p-(m-Tolyloxy)phenoxy]-äthyl/carbaminsäureäthylester (83%), $N_D^{20}$: 1,5532

4-[4-(1,1-Dimethyläthyl)phenoxy]phenol und (2-Chloräthyl)carbaminsäureäthylester den 2-[p-(p-tert.-Butylphenoxy)phenoxy]äthyl/carbaminsäureäthylester (60%), gelbes Oel; $n_D^{20}$: 1,5436.

In den nachstehenden Beispielen bezeichnen die Buchstaben A bis Q die folgenden Verbindungen:

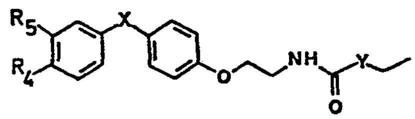

| | $R_5$ | $R_4$ | X | Y |
|---|---|---|---|---|
| A | —H | —H | —O— | —O— |
| B | —H | —H | —C—<br>‖<br>O | —O— |
| C | $—CH_3$ | —H | —O— | —O— |
| D | —H | —H | $—CH_2—$ | —O— |
| E | —H | —H | —O— | —S— |
| F | —H | $—CH_3$ | —O— | —O— |
| G | —H | —Cl | $—CH_2—$ | —O— |
| H | —H | —Cl | —S— | —O— |
| I | —H | —Cl | $—SO_2—$ | —O— |
| J | —H | $—C(CH_3)_3$ | —O— | —O— |
| K | —H | —H | —S— | —O— |
| L | —H | —H | $—SO_2—$ | —O— |
| M | 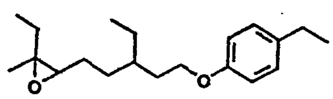 | | | |
| N | 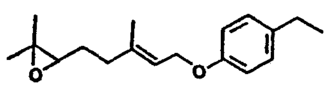 | | | |
| O | 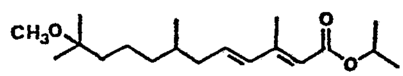 | | | |
| P | 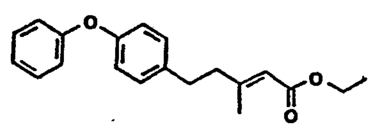 | | | |
| Q | 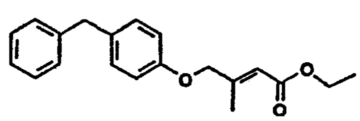 | | | |

Beispiel 10

*Testinsekt:* Aedes aegypti, Gelbfiebermücke.

*Testmethode:* 0,2 ml acetonische Wirkstofflösung werden mit 20 ml Leitungswasser gemischt. Pro Parzelle werden 10 Larven im letzten Larvenstadium angesetzt und bei 25° und 60% relativer Feuchtigkeit inkubiert bis zum Schlüpfen der Adulten in den Kontrollparzellen. Unbehandelte und mit Aceton behandelte Parzellen dienen als Kontrollen. Testdauer: 7 Tage. Die Wirkung wird ausgedrückt als prozentuale Reduktion der Zahl normaler Adulter im Vergleich zu den Kontrollparzellen.

| Dosis ($10^{-x}$g AS/ml Wasser: Verbindung | 7 | 8 | 9 | 10 (% Wirkung) | 11 |
|---|---|---|---|---|---|
| A | 100 | 100 | 100 | 95 | 0 |
| E | 100 | 100 | 100 | 95 | 32 |
| M | 100 | 0 | | | |
| N | 100 | 100 | 48 | 0 | |
| O | 100 | 85 | 80 | 8 | |
| P | 78 | 45 | 0 | | |
| Q | 95 | 44 | 0 | | |

(Unbehandelte Kontrollen: 5% Mortalität)

AS = Aktivstoff.

Beispiel 11

*Testinsekt:* Aedes aegypti, Gelbfiebermücke.

*Testmethode:* 0,2 ml acetonische Wirkstofflösung werden in einem Tablettenröhrchen mit 20 ml Leitungswasser gemischt. Das behandelte Wasser wird 7 Tage unter UV-Light inkubiert und anschliessend werden pro Parzelle 10 Larven im letzten Larvenstadium angesetzt. Der Test wird bei 25° und 60% relativer Feuchtigkeit weiter inkubiert bis zum Schlüpfen der Adulten in den Kontrollparzellen. Unbehandelte und mit Aceton behandelte Parzellen dienen als Kontrollen. Testdauer: 7 Tage unter UV + 7 Tage. Die Wirkung wird ausgedrückt als prozentuale Reduktion der Zahl normaler Adulter im Vergleich zu den Kontrollparzellen.

| Dosis ($10^{-x}$g AS/ml Wasser): Verbindung | 7 | 8 (% Wirkung) | 9 | 10 |
|---|---|---|---|---|
| A | 100 | 100 | 100 | 0 |
| B | 100 | 40 | 18 | |
| C | 100 | 100 | 0 | |
| D | 100 | 100 | | |
| J | 100 | 50 | | |
| K | 100 | 39 | | |
| M | 73 | 9 | | |
| N | 100 | 0 | | |
| O | 15 | 0 | | |
| P | 9 | 0 | | |
| Q | 19 | 3 | | |

(Unbehandelte Kontrollen: 3% Mortalität)

Beispiel 12

*Testinsekt:* Culex pipiens, Gemeine Stechmücke.

*Testmethode:* 1 ml acetonische Wirkstofflösung werden mit 100 ml Leitungswasser gemischt. Pro Parzelle werden 10 Larven im letzten Larvenstadium angesetzt und bei 25° und 60% relativer Feuchtigkeit inkubiert bis zum Schlüpfen der Adulten in den Kontrollparzellen. Unbehandelte und mit Aceton behandelte Parzellen dienen als Kontrollen. Testdauer: 7 Tage. Die Wirkung wird ausgedrückt als prozentuale Reduktion der Zahl normaler Adulter im Vergleich zu den Kontrollparzellen.

| Dosis ($10^{-x}$g AS/ml Wasser): Verbindung | 7 | 8 | 9 (% Wirkung) | 10 | 11 |
|---|---|---|---|---|---|
| A | 100 | 100 | 100 | 46 | 0 |
| B | 100 | 100 | 100 | 14 | |
| D | 100 | 100 | 85 | 43 | 0 |
| M | 100 | 0 | | | |
| N | 100 | 100 | 30 | 0 | |
| O | 100 | 100 | 63 | 15 | |

(Unbehandelte Kontrollen: 5% Mortalität)

Beispiel 13

*Testinsekt:* Adoxophyes reticulana (= A. orana), Apfelschalenwickler.

*Testmethode:* 10 Larven im letzten Larvenstadium werden in eine Petrischale angesetzt, deren Boden vorher mit acetonisher Wirkstofflösung in einer definierten Dosis behandelt wurde. Die Larven werden mit künstlichem Nährmedium gefüttert und bei 25° und 60% relativer Feuchtigkeit inkubiert bis zum Schlüpfen der Adulten in den Kontrollparzellen. Unbehandelte und mit Aceton behandelte Petrischalen dienen als Kontrollen. Testdauer: 15—20 Tage. Die Wirkung wird ausgedrückt als prozentuale Reduktion der Zahl normaler Adulter im Vergleich zu den Kontrollparzellen.

| Dosis ($10^{-x}$g AS/ml $cm^2$): Verbindung | 7 | 8 | 9 (% Wirkung) | 10 | 11 |
|---|---|---|---|---|---|
| A | 100 | 100 | 85 | 38 | 0 |
| C | 100 | 100 | 100 | 95 | 35 |
| D | 100 | 100 | 32 | 0 | |
| G | 100 | 100 | 100 | 13 | |
| H | 100 | 100 | 100 | 59 | 8 |
| I | 100 | 100 | 100 | 64 | 0 |
| L | 100 | 100 | 74 | | |
| K | 100 | 100 | 68 | | |
| M | 100 | 93 | 11 | | |
| N | 82 | 40 | 0 | | |
| O | 80 | 0 | | | |
| P | 26 | 0 | | | |
| Q | 23 | 0 | | | |

(Unbehandelte Kontrollen: 7% Mortalität)

Beispiel 14

*Testinsekt:* Calandra granaria (= Sitophilus granarius), Kornkäfer

*Testmethode:* 20 g Weizen werden mit acetonischer Wirkstofflösung in einer definierten Dosis behandelt. Pro Parzelle werden 20 adulte Kornkäfer angesetzt und bei 29° und 60% relativer Feuchtigkeit inkubiert. Nach 10 Tagen wird die Parentalgeneration entfernt und der Weizen wird unter den gleichen Bedingungen weiter inkubiert bis zum Schlüpfen der Filialgeneration. Unbehandelte und mit Aceton behandelte Parzellen dienen als Kontrollen. Testdauer: ca. 50 Tage. Die Wirkung wird ausgedrückt als prozentuale Reduktion der Filialgeneration (Zahl der Käfer) im Vergleich zu den Kontrollparzellen.

| Dosis ($10^{-x}$g AS/g Weizen): Verbindung | 5 | 6 (% Wirkung) | 7 |
|---|---|---|---|
| A | 100 | 100 | 32 |
| B | 100 | 65 | 0 |
| C | 93 | 18 | |
| M | 50 | 23 | |
| N | 40 | 12 | |
| O | 0 | 0 | |

Beispiel 15

*Testinsekt:* Ephestia kuehniella, Mehlmotte.

*Testmethode:* 10 g Mehl werden in einem grossen Tablettenröhrchen mit acetonischer Wirkstofflösung in einer definierten Dosis behandelt. Pro Parzelle werden 10 Larven im letzten Larvenstadium angesetzt und bei 25° und 60% relativer Feuchtigkeit inkubiert bis zum Schlüpfen der Adulten in den Kontrollparzellen. Unbehandelte und mit Aceton behandelte Parzellen dienen als Kontrollen. Testdauer: 4—5 Wochen. Die Wirkung wird ausgedrückt als prozentuale Reduktion der Zahl normaler Adulter im Vergleich zu den Kontrollparzellen.

| Dosis ($10^{-x}$g AS/g Mehl): Verbindung | 6 (% Wirkung) | 7 |
|---|---|---|
| A | 100 | 100 |
| C | 100 | 100 |
| M | 76 | 51 |
| N | 56 | 0 |
| O | 38 | 24 |

(Unbehandelte Kontrollen: 8% Mortalität)

Beispiel 16

*Testinsekt:* Rhizopertha dominica, Getriedekapuziner.

*Testmethode:* 20 g Weizen werden mit acetonischer Lösung in einer definierten Dosis behandelt. Pro Parzelle werden 20 adulte Käfer angesetzt und für 60 Tage bei 25° und 60% relativer Feuchtigkeit inkubiert. Unbehandelte und mit Aceton behandelte Parzellen dienen als Kontrollen. Testdauer: 60 Tage. Die Wirkung wird ausgedrückt als prozentuale Reduktion der Filialgeneration (Zahl der Käfer) im Vergleich zu den Kontrollparzellen.

| Dosis ($10^{-x}$g AS/g Weizen): Verbindung | 5 | 6 | 7 | 8 |
|---|---|---|---|---|
| | | (% Wirkung) | | |
| A | 100 | 100 | 69 | 0 |
| F | 100 | 100 | 92 | 46 |
| M | 100 | 68 | 0 | |
| N | 100 | 68 | 0 | |

Beispiel 17

*Testinsekt:* Blattella germanica, deutsche Hausschabe.

*Testmethode:* Filterpapierrondellen werden mit acetonischer Wirkstofflösung in einer definierten Dosis behandelt. Aus den behandelten Rondellen werden "Tunnels" geformt und in einen Plastikbecher gegeben. Pro Parzelle werden 10 Larven im frühen letzten Larvenstadium angesetzt, mit Hundefutter und Wasser gefüttert und bei 25° und 60% relativer Feuchtigkeit inkubiert bis zum Schlüpfen der Adulten in den Kontrollparzellen. Unbehandelte und mit Aceton behandelte Filterpapierrondellen dienen als Kontrollen. Testdauer: 3 Wochen. Die Wirkung wird ausgedrückt als prozentuale Reduktion der Zahl normaler Adulter im Vergleich zu den Kontrollparzellen.

| Dosis ($10^{-x}$g AS/cm$^2$): Verbindung | 6 | 7 | 8 |
|---|---|---|---|
| | | (% Wirkung) | |
| A | 100 | 90 | 0 |
| M | 95 | 5 | |
| N | 93 | 42 | |
| O | 21 | | |
| P | 0 | | |

(Unbehandelte Kontrollen: 0% Mortalität)

Beispiel 18

*Testinsekt:* Leptinotarsa decemlineata, Kartoffelkäfer.

*Testmethode:* 1 ml acetonische Wirkstofflösung werden mit 50 cm$^3$ Erde gemischt. Pro Parzelle werden 10 Larven im letzten Larvenstadium angesetzt und mit Kartoffelkraut gefüttert. Der Test wird inkubiert bei 25° und 60% relativer Feuchtigkeit bis zum Schlüpfen der Adulten in den Kontrollparzellen. Unbehandelte und mit Aceton behandelte Parzellen dienen als Kontrollen. Testdauer: 14—20 Tage. Die Wirkung wird ausgedrückt als prozentuale Reduktion der Zahl normaler Adulter im Vergleich zu den Kontrollparzellen.

| Dosis ($10^{-x}$g AS/cm$^3$ Erde): Verbindung | 5 | 6 | 7 |
|---|---|---|---|
| | | (% Wirkung) | |
| A | 100 | 100 | 57 |
| M | 100 | 6 | |

(Unbehandelte Kontrollen: 12% Mortalität)

Beispiel 19

*Emulsionskonzentrat*

| | g/l |
|---|---|
| Wirkstoff der Formel I | 250 |
| N—Methyl-2-pyrrolidon (NMP) | 300 |
| Alkylphenyol-Aethylenoxid-Addukt | 35 |
| Ca-Salz der Dodecylbenzolsulfonsäure | 15 |
| Cycloalkylepoxistearat | 25 |
| Aromatisches Lösungsmittel (Gemisch von $C_{10}$-Alkylbenzolen) | ad 1000ml |

Der Wirkstoff wird im N—Methyl-2-pyrrolidon gelöst, hernach die übrigen Zuschlagsstoffe zugesetzt, gelöst und mit dem aromatischen Lösungsmitel zur Marke gestellt. Das vorliegende Produkt wird zur Herstellung der gebrauchsfertigen Spritzbrühe in Wasser gegeben, wobei spontan eine für Stunden stabile Emulsion (O/W) entsteht.

Beispiel 20

*Spritzpulver*

| | Gew.% |
|---|---|
| Wirkstoff der Formel I | 50 |
| Kieselsäure, hydratisiert (ca. 87% $SiO_2$) | 5 |
| Na-laurylsulfat | 1 |
| Na-lignosulfonat | 2 |
| Kaolin, hauptsächlich $Al_2[Si_2O_5](OH)_4$ | 42 |
| | 100 |

Der (feste) Wirkstoff wird mit den übrigen Formulierungskomponenten in einer geeigneten Vorrichtung homogen vermischt. Das entstandene Pulver wird nun in einem geeigneten Mahlaggregat (z.B. Stiften-, Hammer-, Kugel-, Luftstrahlmühle etc.) auf eine für eine optimale biologische Wirksamkeit notwendige Teilchengrösse feingemahlen und hernach nochmals gemischt. Das vorliegende Spritzpulver wird durch Wasser spontan benetzt und ergibt gut schwebefähige, gebrauchsfertige Spritzbrühen.

Beispiel 21

*Granulat*

| | Gew.% |
|---|---|
| Wirkstoff der Formel I | 5 |
| Tetranatriumsalz der Aethylendiaminotetraessigsäure ($Na_4$-EDTA) | 1 |
| Bimssteingranulat 0,6—1,0 mm | 94 |
| | 100 |

In einem geeigneten Mischwerk wird das Bimssteingranulat vorgelegt und unter stetigem Rühren eine wässrige Lösung des $Na_4$-EDTA aufgesprüht. Die Mischung wird bei 110°C getrocknet und hernach der Wirkstoff, gelöst in einem geeigneten Lösungsmittel (wie z.B. Methylenchlorid), auf das

trockene Gemisch aufgesprüht. Das Lösungsmittel wird durch Erwärmung verdampft und es entsteht ein gut schüttbares Granulat, welches von Hand, mit geeigneten Granulatstreuren oder sogar vom Flugzeug aus auf den Boden oder in das Wasser ausgebracht werden kann. Die poröse Struktur des Bimssteines bewirkt in vielen Fällen eine erwünschte verlangsamte Abgabe des Wirkstoffes über längere Zeit.

**Patentansprüche**

1. Verbindungen der allgemeinen Formel

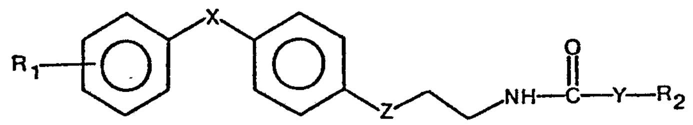

I

worin $R_1$ Wasserstoff, Alkyl mit 1—6 Kohlenstoffatomen, Fluor, Chlor, Trifluormethyl, Hydroxy oder Methoxy, X ein Sauerstoffatom, eine Carbonylgruppe, eine Methylengruppe, ein Schwefelatom oder eine Sulfonylgruppe, Z ein Saurestoffatom, eine Methylengruppe oder ein Schwefelatom, Y ein Sauerstoffatom oder ein Schwefelatom und $R_2$ Alkyl mit 1—6 Kohlenstoffatomen bedeuten.

2. Verbindungen der Formel I in Anspruch 1, dadurch gekennzeichnet, dass Z ein Sauerstoffatom oder ein Schwefelatom bedeutet.

3. Verbindungen der Formel I in Anspruch 1, dadurch gekennzeichnet, dass $R_1$ Wasserstoff, Z ein Sauerstoffatom, X ein Sauerstoffatom, eine Methylengruppe oder eine Carbonylgruppe, Y ein Sauerstoffatom und $R_2$ Aethyl oder Isopropyl bedeuten.

4. 2-(p-Benzoylphenoxy)äthylcarbaminsäureäthylester.

5. 2-(p-Phenoxyphenoxy)äthylcarbaminsäureäthylester.

6. 2 - [p - (p - Chlorbenzoyl)phenoxy]äthylcarbaminsäureäthylester, 2 - [p - (p - Chlorbenzyl)-phenoxy]äthylcarbaminsäureäthylester, 2 - [p - (o - Chlorbenzoyl)phenoxy]äthylcarbaminsäureäthylester, 2 - /p - [(p - Chlorphenyl)thio]phenoxy/äthylcarbaminsäureäthylester, 2 - /p - [(p - Chlorphenyl)sulfonyl]phenoxy/äthylcarbaminsäureäthylester, 2 - [p - (p - Toluoyl)phenoxy]äthylcarbaminsäureäthylester, 2 - [p - (p - Tolyloxy)phenoxy]äthylcarbaminsäureäthylester, 2 - [p - (m - Toluoyl)phenoxy]äthylcarbaminsäureäthylester, 2 - [p - (o - Toluoyl)phenoxy]äthylcarbaminsäureäthylester, 2 - [p - (p - Hydroxybenzoyl)phenoxy]äthylcarbaminsäureäthylester, 2 - (p - Benzylphenoxy)äthylcarbaminsäureäthylester, 2 - (p - Benzoylphenoxy)äthylthiocarbaminsäure - S - äthylester, 2 - [p - (Phenylsulfonyl)phenoxy]äthylcarbaminsäureäthylester, 2 - [p - (Phenylthio)phenoxy]-äthylcarbaminsäureäthylester, 2 - (p - Phenoxyphenoxy)äthylthiocarbaminsäure - S - äthylester, 2 - [p - (Phenylthio)phenoxy]äthylthiocarbaminsäure - S - äthylester, 2 - [p - (p - Chlorphenoxy)-phenoxy]äthylcarbaminsäureäthylester, 2 - [p - (p - Chlorphenoxy)phenoxy]äthylcarbaminsäureisopropylester, 2 - [p - (m - Tolyloxy)phenoxy]äthylcarbaminsäureäthylester, 2 - [p - (p - tert. - Butylphenoxy)phenoxy]äthylcarbaminsäureäthylester.

7. Verbindungen gemäss einem der Ansprüche 1—6 als Schädlingsbekämpfungsmittel.

8. Schädlingsbekämpfungsmittel mit inertem Trägermaterial, dadurch gekennzeichnet, dass es eine oder mehrere Verbindungen der Formel I in Anspruch 1 enthält.

9. Mittel nach Anspruch 8, dadurch gekennzeichnet, dass eine oder mehrere Verbindungen der Formel I, worin $R_1$ Wasserstoff, Z ein Sauerstoffatom, X ein Sauerstoffatom, eine Methylengruppe oder eine Carbonylgruppe, Y ein Sauerstoffatom und $R_2$ Aethyl oder Isopropyl bedeuten, enthält.

10. Mittel nach Anspruch 9, dadurch gekennzeichnet, dass es 2-(p-Benzoylphenoxy)äthylcarbaminsäureäthylester enthält.

11. Mittel nach Anspruch 9, dadurch gekennzeichnet, dass es 2-(p-Phenoxyphenoxy)äthylcarbaminsäureäthylester enthält.

12. Verfahren zur Herstellung von Verbindungen der Formel I in Anspruch 1, dadurch gekennzeichnet, dass man

a) ein Phenol der Formel

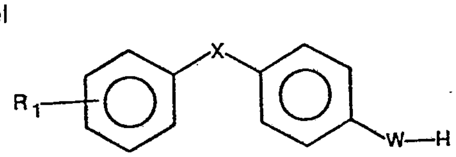

II

worin $R_1$ und X die in Anspruch 1 angegebene Bedeutung besitzen und W ein Sauerstoffatom oder ein Schwefelatom bedeutet,

mit einem Halogenid der Formel

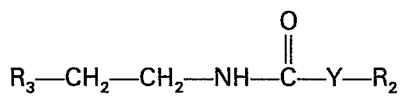

III

worin Y und $R_2$ die in Anspruch 1 angegebene Bedeutung besitzen und $R_3$ Chlor, Brom oder Jod bedeutet, umsetzt, oder

b) eine Verbindung der Formel

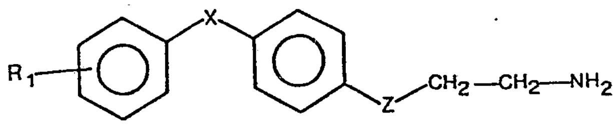

IV

worin $R_1$, X und Z die in Anspruch 1 angegebene Bedeutung besitzen, mit einer Verbindung der Formel

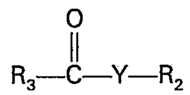

V

worin $R_2$ die in Anspruch 1 angegebene und $R_3$ die oben angegebene Bedeutung besitzen, umsetzt, oder

c) eine Verbindung der Formel

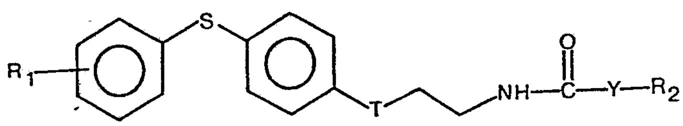

VI

worin $R_1$, Y und $R_2$ die in Anspruch 1 angegebene bedeutung besitzen und T ein Sauerstoffatom oder eine Methylengruppe bedeutet,
mit einer Persäure behandelt.

13. Verfahren nach Anspruch 12, dadurch gekennzeichnet, dass man p-(p-Phenoxy)phenol mit 2-(Chloräthyl)carbaminsäureäthylester umsetzt.

14. Verfahren nach Anspruch 12, dadurch gekennzeichnet, dass man 2-(p-Benzoylphenoxy)-äthylamin mit Chlorameisensäureäthylester umsetzt.

15. Verwendung eines in den Ansprüchen 8 bis 11 genannten Mittels zur Bekämpfung von Schädlingen.

## Claims

1. Compounds of the general formula

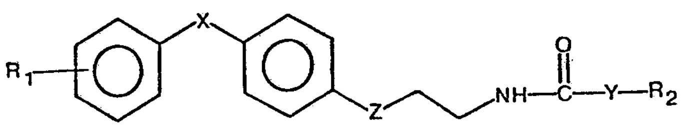

I

wherein $R_1$ signifies hydrogen, alkyl with 1—6 carbon atoms, fluorine, chlorine, trifluoromethyl, hydroxy or methoxy, X signifies an oxygen atom, a carbonyl group, a methylene group, a sulphur atom or a sulphonyl group, Z signifies an oxygen atom, a methylene group or a sulphur atom, Y signifies an oxygen atom or a sulphur atom and $R_2$ signifies alkyl with 1—6 carbon atoms.

2. Compounds of formula I in claim 1, characterised in that Z signifies an oxygen atom or a sulphur atom.

3. Compounds of formula I in claim 1, characterised in that $R_1$ signifies hydrogen, Z signifies an oxygen atom, X signifies an oxygen atom, a methylene group or a carbonyl group, Y signifies an oxygen atom and $R_2$ signifies ethyl or isopropyl.

4. 2-(p-Benzoylphenoxy)ethylcarbamic acid ethyl ester.

5. 2-(p-Phenoxyphenoxy)ethylcarbamic acid ethyl ester.

6. 2 - [p - (p - Chlorobenzoyl)phenoxy]ethylcarbamic acid ethyl ester, 2 - [p - (p - chlorobenzyl)phenoxy]ethylcarbamic acid ethyl ester, 2 - [p - (o - chlorobenzoyl)phenoxy]ethylcarbamic acid ethyl ester, 2 - /p - [(p - chlorophenyl)thio]phenoxy/ethylcarbamic acid ethyl ester, 2 - /p - [(p - chlorophenyl)sulphonyl]phenoxy/ethylcarbamic acid ethyl ester, 2 - [p - (p - toluoyl)phenoxy]ethylcarbamic acid ethyl ester, 2 - [p - (p - tolyloxy)phenoxy]ethylcarbamic acid ethyl ester, 2 - [p - (m - toluoyl)phenoxy]ethylcarbamic acid ethyl ester, 2 - [p - (o - toluoyl)phenoxy]ethylcarbamic acid ethyl ester, 2 - [p - (p - hydroxybenzoyl)phenoxy]ethylcarbamic acid ethyl ester, 2 - (p - benzylphenoxy)-ethylcarbamic acid ethyl ester, 2 - (p - benzoylphenoxy)ethylthiocarbamic acid S - ethyl ester, 2 - [p - (phenylsulphonyl)phenoxy]ethylcarbamic acid ethyl ester, 2 - [p - (phenylthio)phenoxy]ethylcarbamic acid ethyl ester, 2 - (p - phenoxyphenoxy)ethylthiocarbamic acid S - ethyl ester, 2 - [p - (phenylthio)phenoxy]ethylthiocarbamic acid S - ethyl ester, 2 - [p - (p - chlorophenoxy)phenoxy]-ethylcarbamic acid ethyl ester, 2 - [p - (p - chlorophenoxy)phenoxy]ethylcarbamic acid isopropyl ester, 2 - [p - (m - tolyloxy)phenoxy]ethylcarbamic acid ethyl ester, 2 - [p - (p - tert. - butylphenoxy)-phenoxy]ethylcarbamic acid ethyl ester.

7. Compounds in accordance with one of claims 1—6 as pest control agents.

8. Pest control composition with inert carrier material, characterised in that it contains one or more compounds of formula I in claim 1.

9. Composition according to claim 8, characterised in that it contains one or more compounds of formula I, wherein $R_1$ signifies hydrogen, Z signifies an oxygen atom, X signifies an oxygen atom, a methylene group or a carbonyl group, Y signifies an oxygen atom and $R_2$ signifies ethyl or isopropyl.

10. Composition according to claim 9, characterised in that it contains 2-(p-benzoylphenoxy)-ethylcarbamic acid ethyl ester.

11. Composition according to claim 9, characterised in that it contains 2-(p-phenoxyphenoxy)-ethylcarbamic acid ethyl ester.

12. Process for the manufacture of compounds of formula I in claim 1, characterised in that

a) a phenol of the formula

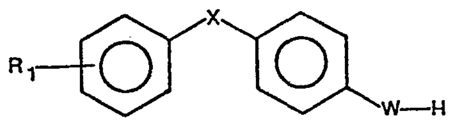

II

wherein $R_1$ and X have the significance given in claim 1 and W signifies an oxygen atom or a sulphur atom, is reacted with a halide of the formula

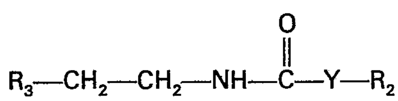

III

wherein Y and $R_2$ have the significance given in claim 1 and $R_3$ signifies chlorine, bromine or iodine, or

b) a compound of the formula

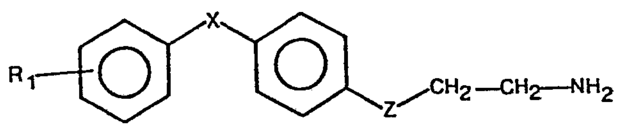

IV

wherein $R_1$, X and Z have the significance given in claim 1, is reacted with a compound of the formula

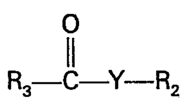

V

wherein $R_2$ has the significance given in claim 1 and $R_3$ has the significance given above, or

c) a compound of the formula

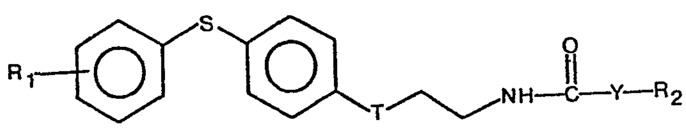

VI

wherein $R_1$, Y and $R_2$ have the significance given in claim 1 and T signifies an oxygen atom or a methylene group, is treated with a peracid.

13. Process according to claim 12, characterised in that p-(p-phenoxy)phenol is reacted with 2-(chloroethyl)-carbamic acid ethyl ester.

14. Process according to claim 12, characterised in that 2-(p-benzoylphenoxy)-ethylamine is reacted with chloroformic acid ethyl ester.

15. Use of a composition set forth in claims 8 to 11 for the control of pests.

**Revendications**

1. Composés de formule générale

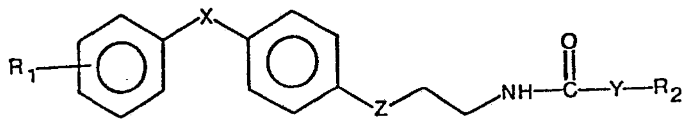

I

dans laquelle $R_1$ représente l'hydrogène, un groupe alkyle contenant de 1 à 6 atomes de carbone, le fluor, le chlore, un groupe trifluorométhyle, hydroxy ou méthoxy, X représente un atome d'oxygène, un groupe carbonyle, un groupe méthylène, un atome de soufre ou un groupe sulfonyle, Z représente un atome d'oxygène, un groupe méthylène ou un atome de soufre, Y représente un atome d'oxygène ou un atome de soufre et $R_2$ représente un groupe alkyle contenant de 1 à 6 atomes de carbone.

2. Composés de formule I selon la revendication 1, caractérisés en ce que Z représente un atome d'oxygène ou un atome de soufre.

3. Composés de formule I selon la revendication 1, caractérisés en ce que $R_1$ représente l'hydrogène, Z un atome d'oxygène, X un atome d'oxygène, un groupe méthylène ou un groupe carbonyle, Y représente un atome d'oxygène et $R_2$ un groupe éthyle ou isopropyle.

4. Le 2-(p-benzoylphénoxy)-éthylcarbamate d'éthyle.

5. Le 2-(p-phénoxyphénoxy)-éthylcarbamate d'éthyle.

6. Le 2 - [p - (p - chlorobenzoyl) - phénoxy] - éthylcarbamate d'éthyle, le 2 - [p - (p - chlorobenzyl) - phénoxy] - éthylcarbamate d'éthyle, le 2 - [p - (o - chlorobenzoyl) - phénoxy] - éthylcarbamate d'éthyle, le 2 - {p - [(p - chlorophényl)thio] - pnénoxy} - éthylcarbamate d'éthyle, le 2 - {p - [(p - chlorophényl) - sulfonyl] - phénoxy} - éthylcarbamate d'éthyle, le 2 - [p - (p - toluoyl) - phénoxy] - éthylcarbamate d'éthyle, le 2 - [p - (p - tolyloxy) - phénoxy] - éthylcarbamate d'éthyle, le 2 - [p - (m - toluoyl) - phénoxy] - éthylcarbamate d'éthyle, le 2 - [p - (o - toluoyl) - phénoxy] - éthylcarbamate d'éthyle, le 2 - [p - (p - hydroxybenzoyl) - phénoxy] - éthylcarbamate d'éthyle, le 2 - (p - benzylphénoxy) - éthylcarbamate d'éthyle, le 2 - (p - benzoylphénoxy) - éthylthiocarbamate de S - éthyle, le 2 - [p - (phénylsulfonyl) - phénoxy] - éthylcarbamate d'éthyle, le 2 - [p - (phénylthio) - phénoxy] - éthylcarbamate d'éthyle, le 2 - (p - phénoxyphénoxy) - éthylthiocarbamate de S - éthyle, le 2 - [p - (phénylthio) - phénoxy] - éthylthiocarbamate de S - éthyle, le 2 - [p - (p - chlorophénoxy) - phénoxy] - éthylcarbamate d'éthyle, le 2 - [p - (p - chlorophénoxy) - phénoxy] - éthylcarbamate d'isopropyle, le 2 - [p - (m - tolyloxy) - phénoxy] - éthylcarbamate d'éthyle, le 2 - [p - (p - tert. - butyl - phénoxy) - phénoxy] - éthylcarbamate d'éthyle.

7. Composés selon l'une des revendications 1 à 6 en tant que produits pesticides.

8. Produit pesticide avec véhicule inerte, caractérisé en ce qu'il contient un ou plusieurs composés de formule I selon la revendication 1.

9. Produit selon la revendication 8, caractérise en ce qu'il contient un ou plusieurs composés de formule I dans laquelle $R_1$ représente l'hydrogène, Z un atome d'oxygène, X un atome d'oxygène, un groupe méthylène ou un groupe carbonyle, Y un atome d'oxygène et $R_2$ un groupe éthyle ou isopropyle.

10. Produit selon la revendication 9, caractérisé en ce qu'il contient du 2-(p-benzoylphénoxy) - éthylcarbamate d'éthyle.

11. Produit selon la revendication 9, caractérisé en ce qu'il contient du 2-(p-phénoxyphénoxy) - éthylcarbamate d'éthyle.

12. Procédé de préparation des composés de formule I selon la revendication 1, caractérisé en ce que

a) on fait réagir un phénol de formule

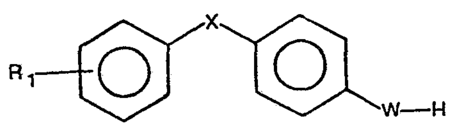

II

dans laquelle $R_1$ et X ont les significations indiquées dans la revendication 1, et W représente un atome d'oxygène ou un atome de soufre, avec un halogénure de formule

$$R_3—CH_2—CH_2—NH—\overset{O}{\overset{\|}{C}}—Y—R_2 \qquad III$$

dans laquelle Y et $R_2$ ont les significations indiquées dans la revendication 1 et $R_3$ représente le chlore, le brome ou l'iode, ou bien

b) on fait réagir un composé de formule

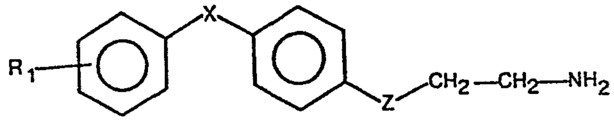

IV

dans laquelle $R_1$, X et Z ont les significations indiquées dans la revendication 1, avec un composé de formule

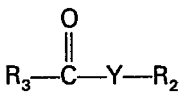

V

dans laquelle $R_2$ a les significations indiquées dans la revendication 1, et $R_3$ la signification indiquée ci-dessus, ou bien

c) on traite un composé de formule

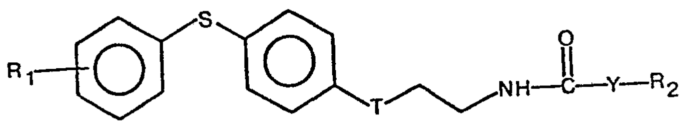

VI

dans laquelle $R_1$, Y et $R_2$ ont les significations indiquées dans la revendication 1 et T représente un atome d'oxygène ou un groupe méthylène, avec un peracide.

13. Procédé selon la revendication 12, caractérisé en ce que l'on fait réagir le p-(p-phénoxy)-phénol avec le 2-(chloréthyl)-carbamate d'éthyle.

14. Procédé selon la revendication 12, caractérisé en ce que l'on fait réagir la 2-(p-benzoylphénoxy)-éthylamine avec le chloroformiate d'éthyle.

15. Utilisation d'un produit mentionné dans les revendications 8 à 11 dans la lutte contre les parasites.